# EUROPÄISCHE PATENTSCHRIFT

(11) **EP 2 775 273 B1**
(45) Veröffentlichungstag und Bekanntmachung des Hinweises auf die Patenterteilung: **04.11.2020**
(21) Anmeldenummer: 13158454.2
(22) Anmeldetag: 08.03.2013
(51) Int. Cl.: G01F 23/284, G01S 7/03, G01S 13/10, G01S 13/34, G01S 13/87, G01S 13/88

(54) **Multi-System-Radar für die Füllstandmessung**
Multi-system radar for filling level measurement
Radar multi-systèmes pour la mesure du niveau de remplissage

(43) Veröffentlichungstag der Anmeldung: 10.09.2014
(73) Patentinhaber: VEGA Grieshaber KG, 77709 Wolfach (DE)
(72) Erfinder: Müller, Christoph, 77728 Oppenau (DE); Schultheiss, Daniel, 78132 Hornberg (DE); Fischer, Michael, 72275 Alpirsbach (DE)
(74) Vertreter: Maiwald Patent- und Rechtsanwaltsgesellschaft mbH

(56) Entgegenhaltungen:
- WO-A1-2007/043951
- DE-A1-102007 045 013
- US-A1- 2003 142 010
- RIVENQ-MENHAJ A ET AL: "Combining two radar techniques to implement a collision avoidance system", MEASUREMENT SCIENCE AND TECHNOLOGY, IOP, BRISTOL, GB, Bd. 9, Nr. 8, 1. August 1998 (1998-08-01), Seiten 1343-1346, XP020064569, ISSN: 0957-0233, DOI: 10.1088/0957-0233/9/8/030

## Beschreibung

### Gebiet der Erfindung

Die Erfindung betrifft die Füllstandmessung. Insbesondere betrifft die Erfindung ein Elektronikmodul für ein Füllstandradar, ein Füllstandradar mit einem derartigen Elektronikmodul, die Verwendung eines FMCW-Füllstandradars und eines Puls-Füllstandradars in Kombination mit einer Schalteinrichtung, sowie ein Verfahren zum Messen eines Füllstandes.

### Hintergrund

Die derzeitigen Füllstandradargeräte arbeiten jeweils nach einem bestimmten Radarprinzip. Die am Markt befindlichen Geräte verwenden entweder das Puls- oder das FMCW-Radarverfahren.

US 7,710,125 B2 beschreibt ein Puls-Radarverfahren, bei dem ein Referenzkanal verwendet wird. DE 198 13 604 A1 beschreibt ein FMCW-Radarverfahren.

Sogenannte Puls-Füllstandradargeräte erzeugen Sendeimpulse, welche mithilfe einer Sendeantenne in Richtung der Füllgutoberfläche ausgestrahlt werden. Diese Impulse werden dann (zumindest teilweise) von der Füllgutoberfläche und gegebenenfalls auch von dem Behälterboden, einer Trennschicht zwischen verschiedenen Füllmedien und/oder Behältereinbauten oder Störstellen reflektiert. Der reflektierte Sendeimpuls wird dann von einer Empfangsantenne (hierbei kann es sich auch um die Sendeantenne handeln) aufgenommen und in einen Zwischenfrequenz-Impuls umgewandelt. Danach erfolgt eine Analog/Digitalwandlung und eine Signalverarbeitung, welche letztendlich das gewünschte Messergebnis liefern soll.

Ein anderes Füllstandradarprinzip ist das FMCW-Prinzip, welches auf frequenzmodulierten, kontinuierlichen Wellen beruht. FMCW- Füllstandradargeräte senden nicht (diskrete) Sendesignalimpulse, sondern vielmehr kontinuierliche Wellen von der Antenne in Richtung Füllgutoberfläche aus, und zwar unter Verwendung eines Frequenzsweeps oder einer Frequenz-Rampe. Auch hier wird das reflektierte Signal von einer entsprechenden Empfangsantenne aufgenommen und in ein Zwischenfrequenzsignal umgewandelt, welches dann einen Analog/Digitalwandler und einer darauffolgenden Signalverarbeitung zugeführt wird.

Die Puls- und FMCW-Radargeräte kommen in den unterschiedlichsten Anwendungen zum Einsatz. Die Hardware dieser zwei Familien an Radargeräten ist dabei sehr unterschiedlich aufgebaut, insbesondere was den Aufbau des Hochfrequenz(HF)-Frontends und dessen Ansteuerung betrifft. Bei dem HF-Frontend handelt es sich um diejenigen Baugruppen des Radargeräts, welche unmittelbar mit der Erzeugung des Sendesignals und der Erzeugung des Zwischenfrequenz-Empfangssignals zusammenhängen.

### Zusammenfassung der Erfindung

Es ist eine Aufgabe der Erfindung, die Qualität der Messergebnisse bei der Füllstandmessung mit Füllstandradargeräten zu erhöhen.

Diese Aufgabe wird durch die Merkmale der unabhängigen Patentansprüche gelöst. Weiterbildungen der Erfindung ergeben sich aus den Unteransprüchen und der nachfolgenden Beschreibung.

Gemäß einem ersten Aspekt der Erfindung ist ein Elektronikmodul für ein Füllstandradar angegeben, welches eine Signalerzeugungseinrichtung und eine Schalteinrichtung aufweist. Die Signalerzeugungseinrichtung weist eine erste Unterbaugruppe und eine zweite Unterbaugruppe auf.

Die erste Unterbaugruppe ist zum Erzeugen eines ersten FMCW-Sendesignals, das dem Aussenden in Richtung einer Füllgutoberfläche durch eine Antenne des Füllstandradars dient, und zum Erzeugen eines Zwischenfrequenz(ZF)-Empfangssignals ausgeführt, welches auf das von der Antenne empfangene reflektierte erste Sendesignal zurückgeht. Unter "Erzeugen" eines ZF-Empfangssignals ist hier und im Folgenden zu verstehen, dass das Radargerät das reflektierte Sendesignal empfängt und dann aus dem empfangenen Signal durch Frequenzumsetzung ein ZF-Signal erzeugt wird.

Die zweite Unterbaugruppe ist zum Erzeugen eines zweiten, pulsförmigen Sendesignals ausgeführt, das dem Aussenden in Richtung der Füllgutoberfläche durch eine (gegebenenfalls andere) Antenne des Füllstandradars dient, und zum Erzeugen eines ZF-Empfangssignals, welches auf das von der Antenne empfangene reflektierte zweite Sendesignal zurückgeht.

Die Schalteinrichtung ist zum wahlweisen (ereignis- und/oder benutzergesteuerten) Aktivieren der ersten Unterbaugruppe und der zweiten Unterbaugruppe ausgeführt.

In anderen Worten kann zu einem bestimmten Zeitpunkt jeweils eine der beiden Unterbaugruppen ausgewählt und verwendet werden, um den Füllstand zu messen. Gemäß einer Ausführungsform der Erfindung weist die erste Unterbaugruppe ein erstes HF-Frontend zum Erzeugen des ersten FMCW-Sendesignals und zum Erzeugen des entsprechenden ZF-Empfangssignals auf. Ebenso kann die zweite Unterbaugruppe ein zweites HF-Frontend zum Erzeugen des pulsförmigen zweiten Sendesignals und zum Erzeugen des ZF-Empfangssignals aufweisen.

Gemäß einer Ausführungsform der Erfindung ist die erste Unterbaugruppe in die zweite Unterbaugruppe integriert. Alternativ kann auch die zweite Unterbaugruppe in die erste Unterbaugruppe integriert sein.

Hierbei ist es möglich und kann vorgesehen sein, dass bestimmte Bauteile der ersten Unterbaugruppe auch von der zweiten Unterbaugruppe verwendet werden, oder umgekehrt.

Gemäß der Erfindung ist die Schaltungseinrichtung zum wahlweisen Aktivieren der ersten Unterbaugruppe und der zweiten Unterbaugruppe in einer fest vorgegebenen zeitlichen Abfolge ausgeführt. Es ist vorgegeben, dass die beiden Unterbaugruppen zyklisch, wechselweise aktiviert bzw. deaktiviert werden.

Gemäß einer weiteren Ausführungsform der Erfindung ist die Schalteinrichtung zum Aktivieren der ersten Unterbaugruppe und/oder der zweiten Unterbaugruppe in Abhängigkeit von beispielsweise der Echosignalamplitude des reflektierten ersten und/oder des reflektierten zweiten Sendesignals ausgeführt. Somit ist es möglich, dass, wenn die Echosignalamplitude beispielsweise im Nahbereich der Antenne über einen bestimmten Wert steigt, das Elektronikmodul vom FMCW-Verfahren zum Puls-Verfahren umschaltet, indem die erste Unterbaugruppe deaktiviert und die zweite Unterbaugruppe aktiviert wird.

Im umgekehrten Fall kann das Elektronikmodul vom Puls-Verfahren zum FMCW-Verfahren umschalten, wenn die Echosignalamplitude eines bestimmten Echos (beispielsweise des Füllstandechos) unter einen bestimmten Schwellwert sinkt bzw. sich unterhalb dieses Schwellwerts befindet.

Gemäß einer weiteren Ausführungsform der Erfindung ist die Schalteinrichtung zum Aktivieren der ersten Unterbaugruppe und/oder der zweiten Unterbaugruppe in Abhängigkeit von einem gemessenen Füllstand ausgeführt.

So kann beispielsweise vorgesehen sein, dass, wenn der Füllstand verhältnismäßig hoch ist, so dass sich die Füllgutoberfläche im Nahbereich der Antenne befindet, das Elektronikmodul von der ersten Unterbaugruppe zur zweiten Unterbaugruppe umschaltet.

Bei niedrigen Füllständen kann beispielsweise vorgesehen sein, dass das Elektronikmodul von der zweiten Unterbaugruppe zur ersten Unterbaugruppe umschaltet.

Gemäß einer weiteren Ausführungsform der Erfindung ist die Schalteinrichtung zum Aktivieren der ersten Unterbaugruppe in Abhängigkeit von der Existenz eines Mehrfachechos im reflektierten zweiten Sendesignal ausgeführt.

Wird also nach dem Puls-Verfahren gemessen und festgestellt, dass sich in dem reflektierten zweiten Sendesignal nicht zuordenbare Echos, beispielsweise Mehrfachechos, befinden, kann das Elektronikmodul auf das FMCW-Verfahren umschalten.

Dies kann vorteilhaft sein, da die Mehrfachreflexionen bei einem FMCW-Radar in höheren ZF-Frequenzbereiche abgebildet werden, die dann weggefiltert werden können.

Gemäß der Erfindung weist das Elektronikmodul eine digitale Signalverarbeitungseinrichtung zur Verarbeitung der reflektierten Sendesignale auf. Vor dieser digitalen Signalverarbeitungseinrichtung kann ein Analog/Digitalwandler vorgesehen sein.

Es ist somit möglich, dass sowohl das FMCW-Zwischenfrequenzsignal (Messsignal, das aus dem reflektierten Sendesignal hervorgeht) und das ZF-Pulssignal durch dieselbe Signalverarbeitungseinrichtung verarbeitet werden. Hierfür sind sowohl das HF-Frontend des FMCW-Systems als auch das HF-Frontend des Puls-Systems über einen Analog/Digitalwandler an die digitale Signalverarbeitungseinrichtung angeschlossen.

Gemäß einem weiteren Aspekt der Erfindung ist ein Füllstandradar mit einem oben und im Folgenden beschriebenen Elektronikmodul angegeben.

Gemäß einer weiteren Ausführungsform der Erfindung weist das Füllstandradar eine einzige Antenne auf, an welche die Signalerzeugungseinrichtung angeschlossen ist, und welche zum Aussenden der Sendesignale und zum Empfang der reflektierten Sendesignale ausgeführt ist.

Alternativ können beispielsweise zwei getrennte Sende-/Empfangsantennen vorgesehen sein, von denen die eine an das HF-Frontend des FMCW-Systems und die andere an das HF-Frontend des Puls-Systems angeschlossen ist.

Gemäß einem weiteren Aspekt der Erfindung ist die Verwendung eines FMCW-Füllstandradars und eines Puls-Füllstandradars in Kombination mit einer Schalteinrichtung zum wahlweisen Aktivieren des FMCW-Füllstrandradars und des Puls-Füllstandradars angegeben.

Bei den beiden Füllstandradaren kann es sich um getrennte Vorrichtungen handeln, die beispielsweise jeweils eine eigene Antenne aufweisen, sowie eine eigene digitale Signalverarbeitung.

Auch kann vorgesehen sein, dass jeder der beiden Füllstandradare seine eigene Antenne aufweist, die Signalverarbeitung der von den beiden Füllstandradaren erzeugten ZF-Signale jedoch in einer gemeinsamen digitalen Signalverarbeitungseinrichtung erfolgt.

Gemäß einem weiteren Aspekt der Erfindung ist ein Verfahren zum Messen eines Füllstandes angegeben, bei welchem zunächst ein FMCW-Sendesignal durch eine erste Unterbaugruppe einer Signalerzeugungseinrichtung des Füllstandradars erzeugt wird. Daraufhin wird das FMCW-Sendesignal in Richtung einer Füllgutoberfläche durch eine Antenne des Füllstandradars ausgesendet. Dieses Signal wird dann (unter anderem) an der Füllgutoberfläche reflektiert und das resultierende, reflektierte Sendesignal wird dann von dem Füllstandradar empfangen. Aus dem empfangenen, reflektierten Sendesignal wird dann ein ZF-Empfangssignal erzeugt, welches auf das von der Antenne empfangene reflektierte erste Sendesignal zurückgeht.

Daraufhin wird eine zweite Unterbaugruppe der Signalerzeugungseinrichtung aktiviert, woraufhin ein zweites, pulsförmiges Sendesignal durch die zweite Unterbaugruppe erzeugt wird, das daraufhin in Richtung der Füllgutoberfläche durch eine Antenne des Füllstandradars ausgesendet wird. Das entsprechende reflektierte Sendesignal wird von der Antenne empfangen und aus diesem wird dann ein ZF-Empfangssignal erzeugt.

Somit ist es also möglich, zwischen Puls- und FMCW-Radarverfahren umzuschalten.

Im Folgenden werden mit Verweis auf die Figuren Ausführungsbeispiele der Erfindung beschrieben.

### Kurze Beschreibung der Figuren

Fig. 1 zeigt Komponenten eines Füllstandradars gemäß einem Ausführungsbeispiel der Erfindung.
Fig. 2 zeigt Komponenten eines Füllstandradars gemäß einem weiteren Ausführungsbeispiel der Erfindung.
Fig. 3 zeigt Komponenten eines Füllstandradars gemäß einem weiteren Ausführungsbeispiel der Erfindung.
Fig. 4 zeigt Komponenten eines Füllstandradars gemäß einem weiteren Ausführungsbeispiel der Erfindung.
Fig. 5 zeigt ein in einen Behälter eingebautes Füllstandradar gemäß einem weiteren Ausführungsbeispiel der Erfindung.
Fig. 6 zeigt Beispiele für Koppler, die in den Ausführungsbeispielen der Figuren 2, 3 oder 4 verwendet werden können.
Fig. 7 zeigt ein Flussdiagramm eines Verfahrens gemäß einem Ausführungsbeispiel der Erfindung.
Fig. 8 zeigt Komponenten eines Füllstandradars gemäß einem weiteren Ausführungsbeispiel der Erfindung.
Fig. 9 zeigt Komponenten eines Füllstandradars gemäß einem weiteren Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

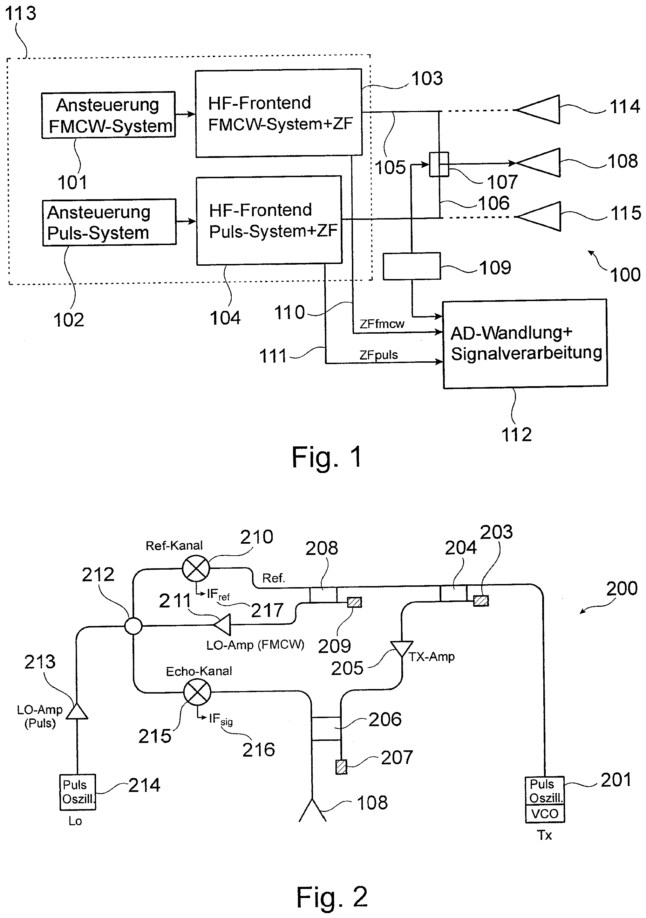

Fig. 1 zeigt Komponenten eines Füllstandradars 100 gemäß einem Ausführungsbeispiel der Erfindung. Das Füllstandradar weist ein Elektronikmodul 112, 113 sowie eine oder mehrere Antennen 108 oder 114, 115 auf.

Das Füllstandradargerät 100 kann, je nach Anwendung bzw. äußeren Umständen, vorteilhafter im Puls- oder FMCW-Modus betrieben werden. Bei großen Stör- oder Nutzechos hat das FMCW-Radarverfahren unter Umständen Probleme im Bereich um das große Signal, da hier systembedingt der Rauschpegel um das große Signal herum ansteigt. Das FMCW-Füllstandradar ist dadurch in unmittelbarer Umgebung eines großen Signals (reflektiertes Sendesignal) oft "blind". Gleiches gilt im Nahbereich der Antenne aufgrund des großen Lecksignals an der Antenneneinkopplung.

Das Puls-System hat diesen nachteiligen Effekt nicht. Allerdings kann das Puls-System schneller an seine Empfindlichkeitsgrenze gelangen, als das FMCW-System. Gerade bei sehr kleinen Echos bietet das FMCW-System in dieser Hinsicht Vorteile gegenüber dem Puls-System.

Unterschiede der beiden Systeme werden auch bei Mehrfach-Reflexionen deutlich. Beim Puls-Verfahren werden oft viele tausend Einzelpulse pro Sekunde ausgesendet, die innerhalb der Messstrecke mehrfach zwischen dem Füllgut und der Antenne hin- und herlaufen können. Es können so Echosignale (ZF-Signale) entstehen, die keiner Reflexion an einem realen Objekt zugeordnet werden können, da die Signallaufzeit größer ist, als es der Maximalentfernung entsprechen würde. So können mehrfach reflektierte Echos die Antenne zusammen mit der Hauptreflexion eines späteren Pulses erreichen.

Beim FMCW-System hingegen bilden sich die Signale aus Mehrfachreflexionen in höheren ZF-Frequenzen ab, die dann weggefiltert werden können.

Die Signalerzeugungseinrichtung 113 des in der Fig. 1 gezeigten Füllstandradars weist ein HF-Frontend 103 auf, welches ein FMCW-Sendesignal erzeugen kann. Es ist eine Steuerung vorgesehen, die das HF-Frontend 103 mittels eines Ansteuerungssignals 101 aktivieren bzw. deaktivieren kann.

Ebenso weist die Signalerzeugungseinrichtung 113 ein zweites HF-Frontend 104 auf, welches ein pulsförmiges Sendesignal erzeugen kann, wie dies für Puls-Radargeräte üblich ist. Zur Aktivierung bzw. Deaktivierung des zweiten HF-Frontends 104 ist ebenfalls eine Steuerung vorgesehen, welche das Ansteuerungssignal 102 erzeugt.

Die so erzeugten Sendesignale werden dann von dem entsprechenden HF-Frontend 103, 104 über die entsprechende Leitung 105, 106 an die Antenne 108 übertragen, die das Sendesignal in Richtung Füllgutoberfläche abstrahlt.

Die Signalleitungen 105, 106 sind über einen HF-Schalter oder Koppler 107 mit der Antenne 108 verbunden.

Der HF-Schalter kann beispielsweise über die Steuerung 109 geschaltet werden. Grundsätzlich wäre es somit möglich, dass die beiden HF-Frontends 103, 104 kontinuierlich FMCW-Sendesignale bzw. Puls-Sendesignale erzeugen, jedoch nur eines dieser beiden Signale tatsächlich an die Antenne 108 weitergeleitet wird, je nach Einstellung des HF-Schalters 107.

In vielen Fällen wird es aber sinnvoll sein, dass die Steuerung 101, 102 jeweils nur dasjenige HF-Frontend 103, 104 zu einem bestimmten Zeitpunkt aktiviert, an dem das entsprechende HF-Frontend über die Füllstandmessung eingesetzt werden soll.

Alternativ können auch zwei Antennen 114, 115 vorgesehen sein, wobei die erste Antenne 114 an das erste HF-Frontend 103 und die zweite Antenne 115 an das zweite HF-Frontend 104 angeschlossen ist. In diesem Falle ist kein HF-Schalter oder Koppler 107 notwendig.

Das ausgestrahlte Sendesignal wird dann unter anderem von der Füllgutoberfläche reflektiert und das entsprechende reflektierte Sendesignal wird von der Antenne 108 bzw. 114 oder 115 aufgenommen und dem das ursprüngliche Sendesignal erzeugenden HF-Frontend 103, 104 zugeleitet. Das entsprechende HF-Frontend 103, 104 erzeugt aus dem so empfangenen reflektierten Sendesignal ein Zwischenfrequenzsignal, wie dies im Stand der Technik bekannt ist. Beide HF-Frontends sind über eine eigene Signalleitung 110, 111 an eine Signalverarbeitungseinrichtung 112 mit vorgeschalteter Analog/Digitalwandlung angeschlossen. Die erzeugten ZF-Signale werden also zunächst digitalisiert und dann einer Signalverarbeitung unterzogen, um letztendlich den Füllstand zu bestimmen.

Fig. 1 zeigt demnach ein Ausführungsbeispiel mit komplett getrennten Frontend-Zweigen für Puls- und FMCW-System. Der jeweils aktive Zweig wird zum Analog/Digitalwandler durchgeschaltet.

Die beiden Frontends können also von einem entsprechenden Logiksignal 101, 102 der Steuerung wahlweise aktiviert werden. Die Schnittstelle für die Auswerteelektronik kann ein Analog/Digitalwandler sein. Beim Umschalten auf das jeweils andere Messprinzip ist neben der Hardware auch die Auswerte-Software anzupassen. Für diese Auswerte-Softwareanpassung ist die Steuerung 109 mit der Signalverarbeitungseinrichtung 112 verbunden.

An dieser Stelle sei daraufhingewiesen, dass sämtliche Steuerkomponenten in einem einzelnen Bauteil integriert sein können.

Die Signale 101 und 102 können einfache Logiksignale sein, oder auch frontendspezifische erforderliche Signale beinhalten, z.B. Taktsignale oder Strom-/Spannungszuführungen.

Fig. 2 zeigt ein weiteres Ausführungsbeispiel für ein Füllstandradar 200. Im Frontend-Bereich gibt es Komponenten, die in beiden Systemen (dem FMCW-System und dem Puls-System) auftreten. Dies betrifft beispielsweise den HF-Mischer (Echokanal), den Oszillator oder auch Koppler-Strukturen.

In Fig. 2 ist das Layout eines Puls-Systems gezeigt, welches durch kleine Erweiterungen zu einem FMCW-System ergänzt ist. Je nach Messprinzip sind dann verschiedene Komponenten ein- oder auszuschalten.

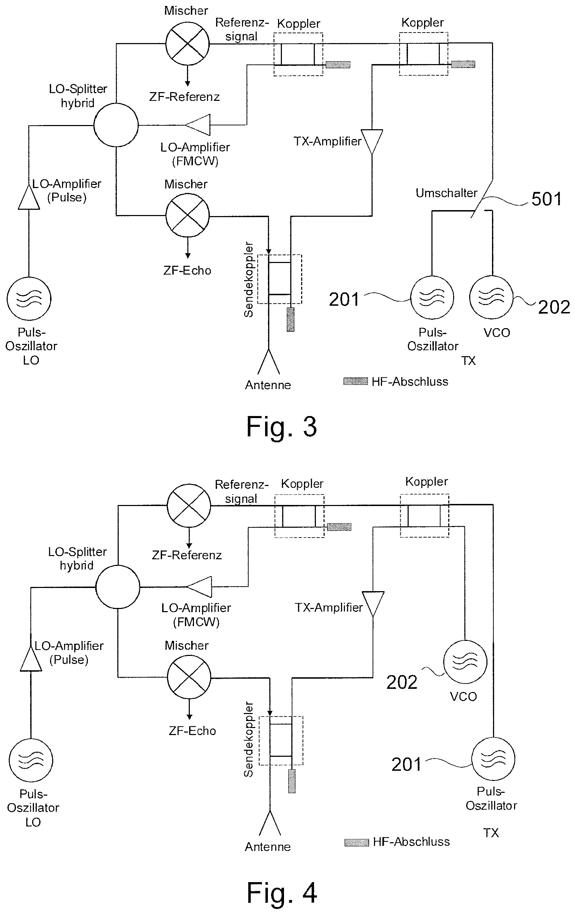

Diese Ausführung kann in Details variiert werden. Alternative Ausführungsbeispiele sind in den Figuren 3 und 4 gezeigt. Zum Beispiel kann ein spezieller Sendeoszillator 201 vorgesehen sein, der sowohl im Puls- als auch im FMCW-Betrieb (in diesem Falle als VCO) betrieben werden kann.

Alternativ können ein Puls-Oszillator 201 und ein separater VCO 202 vorgesehen sein, die getrennt voneinander wahlweise betrieben werden können, wie dies in den Figuren 3 und 4 gezeigt ist. Im Ausführungsbeispiel der Fig. 3 ist ein Umschalter 501 vorgesehen, der zwischen dem Puls-Oszillator 201 und dem VCO 202 hin- und herschalten kann. Im Ausführungsbeispiel der Fig. 4 fehlt dieser Umschalter. Hier wird der jeweils benötigte Oszillator 201, 202 aktiviert und der andere Oszillator 202, 201 deaktiviert. Schaltungstechnisch erfolgt die Zusammenführung der beiden Oszillatorsignale über den Koppler 204, der HF-Abschluss 203 entfällt dabei.

Der End-Nutzer kann das Messprinzip des Füllstandradars beispielsweise selber einstellen. Auch kann vorgesehen sein, dass die Auswerte-Software sich aufgrund der aktuellen Echo-Verhältnisse für das eine oder das andere Messprinzip entscheidet.

Auch kann vorgesehen sein, dass zwischen den beiden Messprinzipien zyklisch, also in einer fest vorgegebenen zeitlichen Abfolge, hin- und hergewechselt wird.

Auch kann die Signalverarbeitung variabel gestaltet sein: Die Messwert-Ermittlung kann beispielsweise für jedes System (FMCW bzw. Puls) getrennt erfolgen, oder es ist vorgesehen, dass die Auswerteergebnisse, welche die Signalverarbeitungseinrichtung 112 (nicht dargestellt in Fig. 2) aus dem FMCW-Modus und dem Puls-Modus einander ergänzend Berücksichtigung finden.

So kann beispielsweise zunächst eine FMCW-Messung stattfinden und daraufhin eine Puls-Messung. Beide Messungen können unterschiedliche Ergebnisse liefern, welche jedoch in einer Gesamtauswertung alle miteinander berücksichtigt werden. So kann das Messergebnis der FMCW-Messung beispielsweise insbesondere zur Identifikation von Mehrfachechos und Echos mit kleinen Amplituden verwendet werden, wohingegen das Ergebnis der Puls-Messung für den Nahbereich oder andere Echos mit großen Amplituden berücksichtigt wird.

Das von dem Puls-Oszillator 201 (der gegebenenfalls auch als VCO arbeiten kann, vgl. Fig. 2) erzeugte Signal wird einem Koppler 204 zugeleitet, der das Signal aufteilt. Der eine Teil wird dem Sendekanal zugeordnet, der zweite Teil stellt im Falle des Pulsbetriebs den Referenzkanal dar, im Falle des FMCW-Betriebs wird dieses Signal als LO für den Echokanalmischer verwendet.

Ein Ausgang des Kopplers 204 (Sendekanal) führt über einen TX-Verstärker (Sendeverstärker) 205 zu einem Sendekoppler 206, dessen erster Ausgang an einen HF-Abschluss 207 angeschlossen ist. Der andere Ausgang führt zur Antenne 108, welche das Sendesignal zum Füllgut abstrahlt. Der mit der Antenne 108 verbundene Echokanal weist ebenfalls einen Mischer 215 auf, der einerseits über den Koppler 206 an die Antenne 108 und andererseits an den Splitter 212 angeschlossen ist und dessen Ausgang 216 das Zwischenfrequenz-Messsignal (also das in ein Zwischenfrequenzsignal umgewandelte reflektierte Sendesignal) ausgibt.

Das reflektierte Sendesignal wird von der Antenne 108 aufgenommen und dann über den Koppler 206 an einen Mischer 215 übertragen.

An den zweiten Ausgang des ersten Kopplers 204 ist ein weiterer Koppler 208 angeschlossen. Der zweite Eingang des weiteren Kopplers 208 ist an einen HF-Abschluss 209 angeschlossen.

An den oberen Ausgang des Kopplers 208 ist der Referenzkanal-Mischer angeschlossen. Das Referenzsignal (nur für den Puls-Modus) wird über den in diesem Referenzkanal befindlichen Mischer 210 erzeugt, der auf der einen Seite mit dem Signal des Puls-Oszillators 201 versorgt wird, und auf der anderen Seite mit dem Signal des LO-Pulsoszillators 214 über den LO-Verstärker 213 und den Splitter 212. Der Mischerausgang 217 stellt das Zwischenfrequenz-Referenzsignal bereit. Für den FMCW-Betrieb ist dieser Referenzkanal nicht notwendig und wird nicht ausgewertet.

Zu guter Letzt ist noch ein LO-Puls-Oszillator 214 vorgesehen, dessen Ausgangssignal durch den LO-Verstärker (Puls) 213 verstärkt und an dem Splitter 212 zugeführt wird. Auch wird dem Splitter 212 das zweite Ausgangssignal des Kopplers 208 zugeführt, nachdem es durch den LO-Verstärker (FMCW) 211 verstärkt worden ist.

Im Falle einer FMCW-Messung wird der LO-Verstärker (FMCW) 211 eingeschaltet und der LO-Verstärker (Puls) 213 und auch der LO-Puls-Oszillator 214 abgeschaltet. Der Echokanal-Mischer erhält sein LO (local oscillator)-Signal aus dem Sendeoszillator 202 (VCO) bzw. 201 (kombinierter PULS-Oszillator und VCO) über die Koppler 204, 208, dem Verstärker 211 und dem Splitter 212. Im Falle einer Puls-Messung erfolgt das gegensätzliche Ein-/Ausschalten der LO-Verstärker. In diesem Fall ist auch der LO-Puls-Oszillator 214 wieder eingeschaltet. Somit erhält der Echokanal-Mischer sein LO-Signal nun vom LO-Puls-Oszillator 214, ebenso wie der Referenzsignal-Mischer 210.

Es kann ein spezieller TX-Oszillator 201 vorgesehen sein, der sowohl im Puls- als auch im FMCW-Betrieb betrieben werden kann (Fig. 2).

In einer weiteren Ausführungsform werden ein Puls-Oszillator 201 und ein VCO 202 getrennt vorgesehen und wahlweise betrieben (Fig 3 oder Fig. 4).

In weiteren Ausführungsformen sind Systeme dargestellt, die keinen Referenzkanal für den Puls-Betrieb besitzen. Die Anzahl der Koppler und der Hardware-Aufwand insgesamt gehen deutlich zurück.

In den dargestellten Ausführungsformen sind Verstärker für das Sendesignal (TX) und das LO-Signal dargestellt, welche bei ausreichender Oszillatoramplitude auch entfallen können.

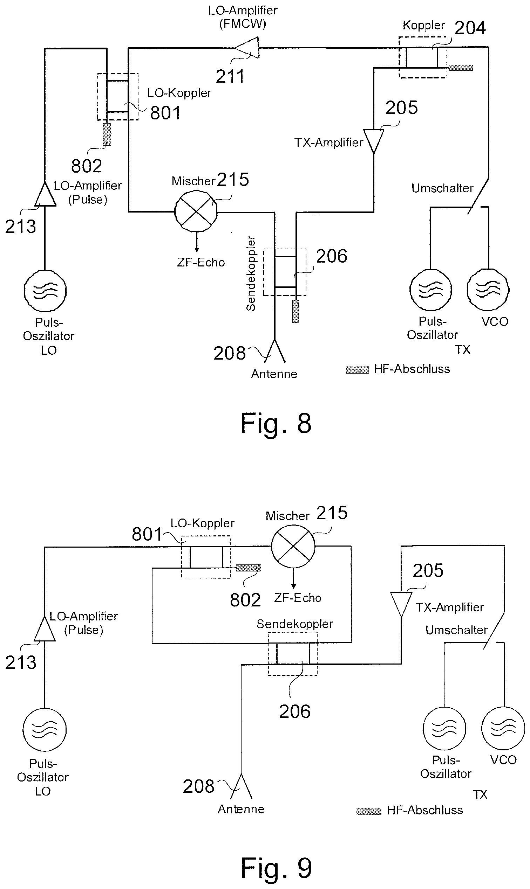

In den Figuren 8 und 9 zeigen Ausführungen für den Pulsbetrieb, allerdings ohne einen Referenzkanal.

Im Ausführungsbeispiel der Fig. 8 entfallen im Vergleich zu Fig. 2 der Koppler 208, der Mischer 210 und der Splitter 212. Anstelle des Splitters 212 ist ein LO Koppler 801 vorgesehen. Der erste Eingang des Kopplers 801 ist an den LO Verstärker 211 angeschlossen, der zweite Eingang an den LO Verstärker 213. Der erste Ausgang ist an den Mischer 215 des Echo-Kanals angeschlossen und der zweite Ausgang an einen HF-Abschluss 802.

Im Ausführungsbeispiel der Fig. 9 ist neben dem Sendekoppler 206 ebenfalls ein LO Koppler 801 mit HF-Abschluss 802 vorgesehen. Der LO Koppler 801 ist, wie auch in der Fig. 8, an den LO Verstärker 213 angeschlossen. Weiterhin ist er mit dem Sendekoppler 206 verbunden. An dem vierten Anschluss des LO Kopplers 801 befindet sich der Mischer 215, der das ZF Echosignal ausgibt und über den Sendekoppler 206 mit der Antenne 208 verbunden ist.

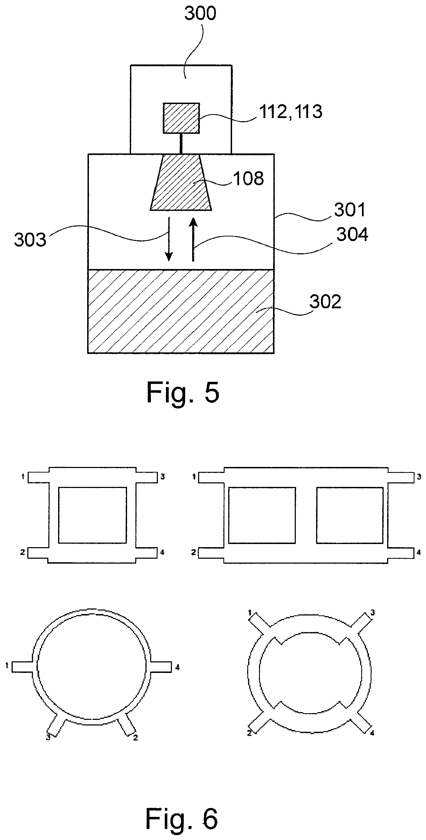

Fig. 5 zeigt ein Füllstandradar 300, welches in einen Behälter 301 eingebaut ist und das ein Elektronikmodul mit einer Signalerzeugungseinrichtung 113 und einer Schalteinrichtung 112 aufweist. Das Elektronikmodul ist an einer Antenne 108 angeschlossen, welche das Sendesignal 303 in Richtung Füllgut 302 abstrahlt. Dieses Sendesignal wird dann (zumindest teilweise) reflektiert und das reflektierte Sendesignal 304 von der Antenne 108 empfangen und an das Elektronikmodul weitergeleitet, wo es in ein Zwischenfrequenzsignal umgewandelt, digitalisiert und dann einer weiteren Signalverarbeitung unterzogen wird.

Fig. 6 zeigt vier Beispiele für Koppler 204, 206, 208, 801, sowie Splitter 212, die in den Ausführungsbeispielen der Figuren 2, 3, 4, 8 oder 9 verwendet werden können. Links oben ist ein zweiarmiger Branchline-Koppler (90°-Hybrid) gezeigt, daneben ein dreiarmiger Branchline-Koppler für größere Bandbreite (90°-Hybrid). Links unten ist ein Ring-Koppler (rat-race, 180°-Hybrid) gezeigt und daneben ein zweiarmiger Branchline-Koppler (90°-Hybrid) in Ringform. Der Koppler 206 kann auch durch einen Zirkulator ersetzt werden, dabei kann der HF-Abschluss 207 entfallen.

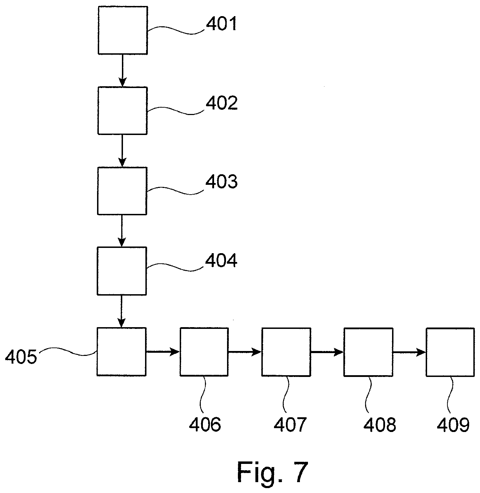

Fig. 7 zeigt ein Flussdiagramm eines Verfahrens gemäß einem Ausführungsbeispiel der Erfindung. In Schritt 401 wird ein Puls-Sendesignal durch eine Unterbaugruppe einer Signalerzeugungseinrichtung eines Füllstandradars erzeugt. Dieses Puls-Sendesignal wird dann in Schritt 402 in Richtung des Füllguts mithilfe einer Sendeantenne des Füllstandradars abgestrahlt. In Schritt 403 wird das reflektierte Sendesignal von der Antenne empfangen und an das Elektronikmodul des Füllstandradars weitergeleitet, wo es in ein ZF-Signal umgewandelt, digitalisiert und einer anschließenden Signalverarbeitung unterworfen werden kann. Aufgrund besonderer Umstände, die beispielsweise mit der Form der zuletzt aufgenommenen Echokurve und/oder wenn der Benutzereingriff und/oder aufgrund einer vorprogrammierten zyklischen Abfolge eintritt, wird nun eine andere Unterbaugruppe der Signalerzeugungseinrichtung aktiviert (Schritt 404).

In Schritt 405 erzeugt diese zweite Unterbaugruppe ein FMCW-Sendesignal, welches in Schritt 406 über dieselbe Antenne in Richtung Füllgutoberfläche abgestrahlt wird, reflektiert wird und wieder von der Antenne aufgenommen wird. Aus diesem reflektierten und aufgenommenen Sendesignal wird in Schritt 407 ein ZF-Empfangssignal erzeugt, welches auf das von der Antenne empfangene reflektierte Sendesignal zurückgeht. Dieses Empfangssignal wird dann digitalisiert und in Schritt 408 einer Auswertung unterworfen. In Schritt 409 wird die andere Unterbaugruppe wieder deaktiviert und unter Verwendung der ersten Unterbaugruppe weitergemessen.

## Patentansprüche

1. Elektronikmodul (112, 113) für ein Füllstandradar (100, 200, 300), das Elektronikmodul aufweisend:
eine Signalerzeugungseinrichtung (113) mit
- einer ersten Unterbaugruppe (103) zum Erzeugen eines ersten FMCW Sendesignals, das dem Aussenden in Richtung einer Füllgutoberfläche durch eine Antenne (108, 114, 115) des Füllstandradars (100, 200, 300) dient, und zum Erzeugen eines ZF Empfangssignals, welches auf das von der Antenne empfangene reflektierte erste Sendesignal zurückgeht; und
- einer zweiten Unterbaugruppe (104) zum Erzeugen eines zweiten, pulsförmigen Sendesignals, das dem Aussenden in Richtung der Füllgutoberfläche durch eine Antenne (108, 115, 114) des Füllstandradars (100, 200, 300) dient, und zum Erzeugen eines ZF Empfangssignals, welches auf das von der Antenne empfangene reflektierte zweite Sendesignal zurückgeht;
eine Schalteinrichtung (101, 102, 112) zum wahlweisen Aktivieren der ersten Unterbaugruppe und der zweiten Unterbaugruppe;
wobei die Schalteinrichtung (101, 102, 112) zum wahlweisen Aktivieren der ersten Unterbaugruppe und der zweiten Unterbaugruppe in einer fest vorgegebenen zeitlichen Abfolge ausgeführt ist;
weiter aufweisend eine digitale Signalverarbeitungseinrichtung (112), die ausgebildet ist, die reflektierten ersten und zweiten Sendesignale zu verarbeiten, um den Füllstand zu bestimmen.

2. Elektronikmodul (112, 113) nach Anspruch 1,
wobei die erste Unterbaugruppe (103) ein erstes HF-Frontend zum Erzeugen des ersten FMCW Sendesignals und zum Erzeugen des ZF Empfangssignals aufweist;
wobei die zweite Unterbaugruppe (104) ein zweites HF-Frontend zum Erzeugen des pulsförmigen zweiten Sendesignals und zum Erzeugen des ZF Empfangssignals aufweist.

3. Elektronikmodul (112, 113) nach einem der vorhergehenden Ansprüche,
wobei die erste Unterbaugruppe in die zweite Unterbaugruppe integriert ist.

4. Elektronikmodul (112, 113) nach einem der vorhergehenden Ansprüche,
wobei die Schalteinrichtung (101, 102, 112) zum Aktivieren der ersten Unterbaugruppe oder der zweiten Unterbaugruppe in Abhängigkeit von einer Echosignalamplitude des reflektierten ersten oder zweiten Sendesignals ausgeführt ist.

5. Elektronikmodul (112, 113) nach einem der vorhergehenden Ansprüche,
wobei die Schalteinrichtung (101, 102, 112) zum Aktivieren der ersten Unterbaugruppe oder der zweiten Unterbaugruppe in Abhängigkeit von einem gemessenen Füllstand ausgeführt ist.

6. Elektronikmodul (112, 113) nach einem der vorhergehenden Ansprüche,
wobei die Schalteinrichtung (101, 102, 112) zum Aktivieren der ersten Unterbaugruppe in Abhängigkeit von der Existenz eines Mehrfachechos im reflektierten zweiten Sendesignal ausgeführt ist.

7. Elektronikmodul (112, 113) nach einem der vorhergehenden Ansprüche,
wobei eine Schalteinrichtung (101, 102, 112) zum Aktivieren der ersten oder zweiten Unterbaugruppe in Abhängigkeit der entstehenden Rauschpegel oder des Klingelverhaltens ausgeführt ist.

8. Füllstandradar (300) mit einem Elektronikmodul nach einem der Ansprüche 1 bis 7.

9. Füllstandradar (300) nach Anspruch 8,
wobei das Füllstandradar eine einzige Antenne (108) aufweist, an welche die Signalerzeugungseinrichtung (113) angeschlossen ist, und welche zum Aussenden der Sendesignale und zum Empfang der reflektierten Sendesignale ausgeführt ist.

10. Verwendung eines FMCW-Füllstandradars und eines Puls-Füllstandradars in Kombination mit einer Schalteinrichtung (101, 102, 112) nach Anspruch 1 zum wahlweisen Aktivieren des FMCW-Füllstandradars und des Puls-Füllstandradars.

11. Verfahren zum Messen eines Füllstandes, aufweisend die folgenden Schritte:
Erzeugen eines ersten FMCW Sendesignals durch eine erste Unterbaugruppe (103) einer Signalerzeugungseinrichtung (113) eines Füllstandradars (100, 200, 300):
Aussenden des ersten FMCW Sendesignals in Richtung einer Füllgutoberfläche durch eine Antenne (108, 114, 115) des Füllstandradars (100, 200, 300);
Empfangen des an der Füllgutoberfläche reflektierten ersten Sendesignals;
Erzeugen eines ZF Empfangssignals, welches auf das von der Antenne empfangene reflektierte erste Sendesignal zurückgeht;
Aktivieren einer zweiten Unterbaugruppe (104) der Signalerzeugungseinrichtung (113);
Erzeugen eines zweiten, pulsförmigen Sendesignals durch die zweite Unterbaugruppe;
Aussenden des zweiten Sendesignals in Richtung der Füllgutoberfläche durch eine Antenne (108, 115, 114) des Füllstandradars (100, 200, 300);
Erzeugen eines ZF Empfangssignals, welches auf das von der Antenne empfangene reflektierte zweite Sendesignal zurückgeht
Verarbeiten der reflektierten ersten und zweiten Sendesignale, um den Füllstand zu bestimmen;
wobei die erste Unterbaugruppe und die zweite Unterbaugruppe zyklisch, wahlweise in einer fest vorgegebenen zeitlichen Abfolge aktiviert werden.

## Claims

1. An electronic module (112, 113) for a fill level radar (100, 200, 300), the electronic module comprising:
a signal generating device (113) having
- a first sub-assembly (103) for generating a first FMCW transmit signal, which is to be emitted towards a filling material surface by an antenna (108, 114, 115) of the fill level radar (100, 200, 300), and for generating an IF reception signal, which originates from the reflected first transmit signal received by the antenna; and
- a second sub-assembly (104) for generating a second, pulse-shaped transmit signal, which is to be emitted towards the filling material surface by an antenna (108, 115, 114) of the fill level radar (100, 200, 300), and for generating an IF receive signal, which originates from the reflected first transmit signal received by the antenna;
a switching device (101, 102, 112) for selectively activating the first sub-assembly and the second sub-assembly;
wherein the switching device (101, 102, 112) is configured to selectively activate the first sub-assembly and the second sub-assembly in a rigidly predetermined temporal sequence;
further comprising a digital signal processing device (112) that is configured to process the reflected first and second transmit signals to determine the fill level.

2. Electronic module (112, 113) according to claim 1,
wherein the first sub-assembly (103) comprises a first HF front-end for generating the first FMCW transmit signal and for generating the IF receive signal;
wherein the second sub-assembly (104) comprises a second HF front-end for generating the pulse-shaped second transmit signal and for generating the IF receive signal.

3. Electronic module (112, 113) according to one of the preceding claims,
wherein the first sub-assembly is integrated into the second sub-assembly.

4. Electronic module (112, 113) according to one of the preceding claims,
wherein the switching device (101, 102, 112) is configured to activate the first sub-assembly or the second sub-assembly as a function of an echo signal amplitude of the reflected first or second transmit signal.

5. Electronic module (112, 113) according to one of the preceding claims,
wherein the switching device (101, 102, 112) is configured to activate the first sub-assembly or the second sub-assembly as a function of a measured fill level.

6. Electronic module (112, 113) according to one of the preceding claims,
wherein the switching device (101, 102, 112) is configured to activate the first sub-assembly as a function of the existence of a multiple echo in the reflected second transmit signal.

7. Electronic module (112, 113) according to one of the preceding claims,
wherein a switching device (101, 102, 112) is configured to activate the first or second sub-assembly as a function of the occurring noise level or the sound behavior.

8. Fill level radar (300) with an electronic module according to one of claims 1 to 7.

9. Fill level radar (300) according to claim 8,
wherein the fill level radar comprises a single antenna (108), to which the signal generating device (113) is connected and which is configured to transmit the transmit signals and to receive the reflected transmit signals.

10. Use of a FMCW fill level radar and a pulse fill level radar in combination with a switching device (101, 102, 112) according to claim 1 for selectively activating the FMCW fill level radar and the pulse fill level radar.

11. Method for measuring a fill level, comprising the following steps:
generating a first FMCW transmit signal by a first sub-assembly (103) of a signal generating device (113) of a fill level radar (100, 200, 300);
transmitting the first FMCW transmit signal towards a filling material surface by an antenna (108, 114, 115) of the fill level radar (100, 200, 300);
receiving the first transmit signal reflected on the filling material surface;
generating an IF receive signal which originates from the reflected first transmit signal received by the antenna;
activating a second sub-assembly (104) of the signal generating device (113);
generating a second, pulse-shaped transmit signal by the second sub-assembly;
transmitting the second transmit signal towards the filling material surface by an antenna (108, 115, 114) of the fill level radar (100, 200, 300);
generating an IF receive signal originates from the reflected second transmit signal received by the antenna;
processing the reflected first and second transmit signals to determine the fill level;
wherein the first sub-assembly and the second sub-assembly are activated cyclically, selectively in a rigidly predetermined temporal sequence.

## Revendications

1. Module électronique (112, 113) pour un radar de niveau de remplissage (100, 200, 300), le module électronique comportant :
un dispositif générateur de signal (113) doté
- d'un premier sous-ensemble (103) destiné à générer un premier signal d'émission à onde entretenue à modulation de fréquence (FMCW), servant à émettre en direction d'une surface de matériau de remplissage par le biais d'une antenne (108, 114, 115) du radar de niveau de remplissage (100, 200, 300), et destiné à générer un signal de réception en fréquence intermédiaire (FI), lequel revient sur le premier signal d'émission réfléchi reçu par l'antenne ; et
- d'un deuxième sous-ensemble (104) destiné à générer un deuxième signal d'émission pulsé, servant à émettre en direction de la surface de matériau de remplissage par le biais d'une antenne (108, 115, 114) du radar de niveau de remplissage (100, 200, 300), et destiné à générer un signal de réception FI, lequel revient sur le deuxième signal d'émission réfléchi reçu par l'antenne ;
un dispositif commutateur (101, 102, 112) destiné à activer sélectivement le premier sous-ensemble et le deuxième sous-ensemble ;
dans lequel le dispositif commutateur (101, 102, 112) est configuré pour activer sélectivement le premier sous-ensemble et le deuxième sous-ensemble dans une séquence chronologique fixe et prédéfinie ;
comportant en outre un dispositif de traitement de signal (112), lequel est réalisé pour traiter les premier et deuxième signaux d'émission réfléchis, afin de déterminer le niveau de remplissage.

2. Module électronique (112, 113) selon la revendication 1, dans lequel le premier sous-ensemble (103) comporte un premier étage frontal HF destiné à générer le premier signal d'émission FMCW et à générer le signal de réception FI ; dans lequel le deuxième sous-ensemble (104) comporte un deuxième étage frontal HF destiné à générer le deuxième signal d'émission pulsé et à générer le signal de réception FI.

3. Module électronique (112, 113) selon l'une des revendications précédentes,
dans lequel le premier sous-ensemble est intégré dans le deuxième sous-ensemble.

4. Module électronique (112, 113) selon l'une des revendications précédentes,
dans lequel le dispositif commutateur (101, 102, 112) est configuré pour activer le premier sous-ensemble ou le deuxième sous-ensemble en fonction d'une amplitude de signal d'écho du premier ou du deuxième signal d'émission réfléchi.

5. Module électronique (112, 113) selon l'une des revendications précédentes,
dans lequel le dispositif commutateur (101, 102, 112) est configuré pour activer le premier sous-ensemble ou le deuxième sous-ensemble en fonction d'un niveau de remplissage mesuré.

6. Module électronique (112, 113) selon l'une des revendications précédentes,
dans lequel le dispositif commutateur (101, 102, 112) est configuré pour activer le premier sous-ensemble ou le deuxième sous-ensemble en fonction de l'existence d'un écho multiple dans le deuxième signal d'émission réfléchi.

7. Module électronique (112, 113) selon l'une des revendications précédentes,
dans lequel un dispositif commutateur (101, 102, 112) est configuré pour activer le premier sous-ensemble ou le deuxième sous-ensemble en fonction du niveau de bruit résultant ou du comportement résonant.

8. Radar de niveau de remplissage (300) doté d'un module électronique selon l'une des revendications 1 à 7.

9. Radar de niveau de remplissage (300) selon la revendication 8,
dans lequel le radar de niveau de remplissage (108) comporte une unique antenne, à laquelle est raccordé le dispositif générateur de signal (113), et laquelle est configurée pour émettre le signal d'émission et pour recevoir le signal d'émission réfléchi.

10. Utilisation d'un radar de niveau de remplissage FMCW et d'un radar de niveau de remplissage à impulsion en combinaison avec un dispositif commutateur (101, 102, 112) selon la revendication 1 afin d'activer sélectivement le radar de niveau de remplissage FMCW et le radar de niveau de remplissage à impulsion.

11. Procédé de mesure d'un niveau de remplissage, comportant les étapes suivantes :
génération d'un premier signal d'émission FMCW par le biais d'un premier sous-ensemble (103) d'un dispositif générateur de signal (113) d'un radar de niveau de remplissage (100, 200, 300) :
émission du premier signal d'émission FMCW en direction d'une surface de matériau de remplissage par le biais d'une antenne (108, 114, 115) du radar de niveau de remplissage (100, 200, 300) ;
réception du premier signal d'émission réfléchi sur la surface de matériau de remplissage ;
génération d'un signal de réception FI, lequel revient sur le premier signal d'émission réfléchi reçu par l'antenne ;
activation d'un deuxième sous-ensemble (104) du dispositif générateur de signal (113) ;
génération d'un deuxième signal d'émission pulsé par le biais du deuxième sous-ensemble ;
émission du deuxième signal d'émission en direction de la surface de matériau de remplissage par le biais d'une antenne (108, 115, 114) du radar de niveau de remplissage (100, 200, 300) ;
génération d'un signal de réception FI, lequel revient sur le deuxième signal d'émission réfléchi reçu par l'antenne ;
traitement des premier et deuxième signaux d'émission réfléchis, afin de déterminer le niveau de remplissage ;
dans lequel le premier sous-ensemble et le deuxième sous-ensemble sont activés sélectivement de manière cyclique dans une séquence chronologique fixe et prédéfinie.
